# EUROPEAN PATENT APPLICATION

(11) **EP 1 180 833 A2**
(43) Date of publication of application: **20.02.2002**
(21) Application number: 01306498.5
(22) Date of filing: 30.07.2001
(51) Int. Cl.: H01S 3/094, H01S 3/067, H04B 10/17

(54) **Optical amplification**

(30) Priority: 07.08.2000 GB 0019387
(71) Applicant: ALCATEL, 75008 Paris (FR)
(72) Inventor: Willets, Derek C., Dartford, Kent DA2 6NL (GB); Zarris, George, London SE19 3DT (GB)
(74) Representative: Hackney, Nigel John

(57) **Abstract**

The present invention provides an optical amplifier including;
a first optical amplifying medium (10) forming at least part of a first optical transmission line (6);
a first pumping means (7) including a source (9) of first pump radiation (λ1) and operable to direct first pump radiation into the first optical amplifying medium;
a second optical amplifying medium (10') forming at least part of a second optical transmission line (6');
an optical coupling means (11) operable to remove from the first optical transmission line first pump radiation output from the first optical amplifying medium and to direct the removed first pump radiation into the second optical amplifying medium.

Thus, it will be understood that the present invention provides an optical amplifier with which unabsorbed pump radiation output a first optical amplifying medium of a first optical transmission line may be redirected into another optical amplifying medium of, preferably, another optical transmission line so as to be utilized for optical pumping therein. Consequently, it can be readily seen that a preferable aim of the present invention according to any of its aspects is to more fully and efficiently use available pump radiation while providing a degree of pump source redundancy.

## Description

The present invention relates to an optical amplifier, and a method for directing pump radiation in optical fibre amplifiers, for example in rare-earth doped-fibre optical amplifiers.

As optical transmission systems demand increasingly high-capacity and/or long-distance transmission, the consequent demands upon the optical and electrical power requirements of optical amplifiers in a given transmission line typically increase. As will be readily apparent, under such circumstances it will become increasingly important to optimize the power efficiency of optical amplifiers in such a transmission line in an effort to reduce power consumption at least.

Current methods of optical amplification include those which employ rare-earth doped-fibre optical amplifiers.

As is well known in the art, such amplifiers typically consist of a length of rare-earth (e.g. Erbium) doped amplifying fibre forming an integral part of the optical transmission line to which it is connected. Consequently, the signal radiation to be amplified may propagate therethrough. A source of pump radiation is coupled to that transmission line via a coupler at one end of the doped fibre. In use, pump radiation is injected into the transmission line by the coupler so as to be combined with signal radiation propagating along the transmission line through the length of doped fibre. The pump radiation subsequently enters the doped fibre whereupon it is absorbed, at least partially, by the fibre dopant thereby providing the energy necessary to achieve the population inversion (in the dopant atoms) required for amplification of the signal radiation propagating through the doped fibre, as is well known in the field.

In particular, dopant atoms (e.g. Erbium) may absorb pump radiation of a wavelength chosen to lie within one of a number of narrow wavelength ranges known as 'pumping bands'. Subsequent to absorbing such radiation the dopant atoms within the amplifying medium may attain population inversion such that signal radiation subsequently propagating through that medium stimulates the emission of photons (from the excited dopant) of a wavelength substantially equal to that of the signal radiation, thus providing amplification of that signal.

However, unused pump radiation, having passed once through the length of the doped fibre without being absorbed, thereafter exits the fibre and enters the rest of the transmission line without being used for achieving signal amplification. Clearly, this technique makes inefficient use of available pump radiation power and could lead to the output optical (i.e. amplified signal) power of the amplifier being insufficiently high. Such a deficiency in system optimization typically requires a greater power input to a given amplifier and/or the use of a greater number of amplifiers in a transmission line. Either remedy is generally undesirable since system penalties such as increased cost and reduced system reliability are typically incurred.

It is known in the art to employ pump power reflectors in an attempt to increase the efficiency of pump power use and to avoid at least some of the penalties outlined above.

In particular, pump power reflectors consist of a reflective element, typically a grating element, placed on the optical transmission line just beyond the output end of the fibre amplifying medium. The transmission characteristics of the reflective element are chosen so as to render it substantially transparent to signal radiation wavelengths (e.g. approx. 1550 nm and above) and highly reflective of radiation at and around the pump radiation wavelength (e.g. approx. 980 nm).

Thus, the reflective element reflects unabsorbed pump radiation emanating from an amplifying fibre back into that fibre while simultaneously transmitting amplified signal radiation emanating from the amplifying fibre. Pump power reflectors are often used not only to attempt efficient use of pump power, but also to remove unused pump power from subsequent parts of the transmission line. The reason for this being that, typically, an optical amplifier includes a signal monitoring device placed beyond the output of the amplifying medium with which signal radiation levels output thereof are monitored by tapping-off and measuring a small proportion of the radiation output.
However, the tap so used often employs a broadband optical coupler which taps radiation of not only the signal wavelength but also of the pump wavelength. The presence of pump radiation in the tapped signal will often result in errors in the monitor output. Hence, removal of pump power from the transmission line prior to the tap is preferable.

The drawback of employing pump power reflectors to do this, and to re-use output pump power, lies in the inherent lack of redundancy they impose upon the pump radiation source associated with them. That is to say, a given one pump power reflector is operable to reflect pump radiation derived from only one pump source. Should that one source fail, then the amplifying medium associated with it will no longer receive any pump radiation despite being functional, and consequently, the entire amplifier will fail. This lack of redundancy in the pump radiation source is inefficient of amplifier resources.

The present invention aims to overcome at least some of the deficiencies of the prior art.

According to a first aspect of the present invention there is provided an optical amplifier including;
a first optical amplifying medium forming at least part of a first optical transmission line;
a first pumping means including a source of first pump radiation and operable to direct first pump radiation into the first optical amplifying medium;
a second optical amplifying medium forming at least part of a second optical transmission line;
an optical coupling means operable to remove from the first optical transmission line first pump radiation output from the first optical amplifying medium and to direct the removed first pump radiation into the second optical amplifying medium.

Thus, it will be understood that the present invention provides an optical amplifier with which unabsorbed pump radiation output a first optical amplifying medium of a first optical transmission line may be redirected into another optical amplifying medium of, preferably, another optical transmission line so as to be utilized for optical pumping therein. Consequently, it can be readily seen that a preferable aim of the present invention according to any of its aspects is to more fully and efficiently use available pump radiation while providing a degree of pump source redundancy.

Preferably the optical amplifier further includes;
a first optical coupling element couplable to the first optical transmission line and operable to remove therefrom first pump radiation output from the first optical amplifying medium;
a second optical coupling element coupled to the first optical coupling element and couplable to the second optical transmission line and operable to direct into the second optical amplifying medium first pump radiation removed from the first optical transmission line by the first coupling element.

Consequently, unused first pump radiation may be removed preferably from the output of the first optical amplifying medium, and such removal is preferably done selective on the basis of its wavelength.

More preferably, the optical amplifier according to the first aspect of the present invention further includes a second pumping means including a source of second pump radiation and operable to direct pump radiation into the second optical amplifying medium.

Preferably, the first optical coupling element is operable to remove second pump radiation and the second optical coupling element is wavelength selective such that it only directs first pump radiation into the second optical amplifying medium.

The second pumping means may preferably include a pump coupling means couplable to the second optical transmission line and said second wavelength-selective optical coupling element is preferably coupled to the second optical transmission line via the pump coupling means of the second pumping means, wherein said pump coupling means is operable to direct into said second optical amplifying medium said second pump radiation and pump radiation removed from the first optical transmission line. Consequently, unused pump radiation output the first amplifying medium may be indirectly input the second amplifying medium without having to splice the second wavelength-selective coupling means into the second transmission line.

The second wavelength-selective optical coupling element may be operable to insert into or remove from an optical transmission line pump radiation lying within one or more predetermined wavelength ranges, which ranges include the wavelength of the first pump radiation and exclude the wavelength of said second pump radiation. Thus, it is intended that second pump radiation will not be removed from the second transmission line by the second wavelength-selective optical coupling element in embodiments incorporating this feature.

However, both the first and second optical coupling elements may be wavelength-selective and be operable to insert into or remove from an optical transmission line pump radiation lying within one or more predetermined wavelength ranges, which ranges include the wavelength of the first pump radiation and exclude the wavelength of said second pump radiation. This would ensure that substantially only the first pump radiation is transferred between transmission lines thereby.

Consequently, when directing unused first pump radiation into, for example, a second transmission line, the second wavelength-selective optical element will, preferably, not simultaneously remove therefrom any of the second pump radiation employed in the second transmission line for pumping the second optical amplifying medium.

Preferably, the second optical coupling element according to the first aspect of the present invention is couplable to the second optical transmission line such that the removed first pump radiation is directed into the second optical amplifying medium so as to co-propagate with any second pump radiation propagating within the second optical amplifying medium.

Accordingly, the present invention permits unused pump radiation from a first optical amplifying medium to be directed into the optical amplifying medium of, for example, a second optical transmission line so as to propagate together with and in the same direction as second pump radiation present in the second optical transmission line, thereby boosting the total pump power injected into that optical amplifying medium.

However, in accordance with the first aspect of the invention, the optical coupling means of the optical amplifier is preferably further operable to remove from the second optical transmission line second pump radiation output from the second optical amplifying medium and to direct the removed second pump radiation into the first optical amplifying medium, wherein;
said second optical coupling element is couplable to the second optical transmission line such that any first pump radiation removed from the first optical transmission line is directed into the second optical amplifying medium so as to counter-propagate with any second pump radiation propagating therein; and,
the first optical coupling element is couplable to the first optical transmission line such that any second pump radiation removed from the second optical transmission line is directed into the first optical amplifying medium so as to counter-propagate with any first pump radiation propagating therein.

Accordingly, a single optical coupling means of the present invention may transfer unused pump radiation both to and from each one of the two transmission lines for optical pumping therein.

More preferably, the optical coupling means according to the first aspect of the invention, and in accordance with any preceding preferable feature, further includes;
an optical coupling means operable to remove from the optical transmission line second pump radiation output from the second optical amplifying medium and to direct the removed pump radiation into the first optical amplifying medium.

Thus, an additional optical coupling means may be employed to further couple the first and second optical transmission lines.

Preferably, the further optical coupling means includes;
a third optical coupling element couplable to the second optical transmission line and operable to remove therefrom second pump radiation output from the second optical amplifying medium;
a fourth optical coupling element coupled to the third optical coupling element and couplable to the first optical transmission line and operable to direct into the first optical amplifying medium second pump radiation removed from the second optical transmission line by the third optical coupling means.

Consequently, unused pump radiation may be removed preferably from the output of the second optical amplifying medium, and such removal is preferably done selectively on the basis of wavelength.

Preferably, the third optical coupling element is operable to remove first pump radiation and the fourth optical coupling element is wavelength selective such that it only directs second pump radiation into the first optical amplifying medium.

The first pumping means may include a pump coupling means couplable to the first optical transmission line and the fourth wavelength-selective optical coupling element is coupled to the first optical transmission line via the pump coupling means of the first pumping means, and the pump coupling means is operable to direct into the first optical amplifying medium said first pump radiation and pump radiation removed from the second optical transmission line. Preferably, the fourth wavelength-selective optical coupling element is operable to remove from an optical transmission line pump radiation lying within one or more predetermined wavelength ranges, which ranges include the wavelength of the second pump radiation and excludes the wavelength of said first pump radiation. Consequently, when directing unused second pump radiation into the first optical amplifying medium, the fourth wavelength-selective optical coupler will, preferably, not simultaneously remove the first pump radiation therefrom.

Preferably, both the third and fourth wavelength-selective optical coupling elements are operable to remove from an optical transmission line pump radiation lying within one or more predetermined wavelength ranges, which ranges include the wavelength of the second pump radiation and exclude the wavelength of first pump radiation. More preferably, the fourth wavelength-selective optical coupling element is couplable to the first optical transmission line such that the removed second pump radiation is directed into the first optical amplifying medium so as to co-propagate with first pump radiation propagating within the first optical amplifying medium.

Thus, only unused second pump radiation is removed from the second transmission line. The present invention may permit unused pump radiation from the second optical amplifying medium to be directed into the first optical amplifying medium so as to propagate together with and in the same direction as first pump radiation present in the first optical amplifying medium, thereby boosting the total pump power injected into that optical amplifying medium.

Preferably, the first and second optical amplifying media are optical fibres doped with rare-earth elements and the first and second pump radiation are of different wavelengths which both reside within the same pumping band of dopant material present within the optical amplifying media.

Alternatively, the first and second optical amplifying media are optical fibres doped with rare-earth elements and the first and second pump radiation are of different wavelengths which separately reside within different pumping bands of dopant material within the first and second optical amplifying media.

As a further alternative, the first and second optical amplifying media are respectively doped with different dopants or with the same dopant, a suitable dopant being Erbium (Er).

Preferably, the wavelength of the first pump radiation differs from the wavelength of the second pump radiation and each said wavelength lies within a pumping band of the first and the second optical amplifying media.

Preferably, the optical coupling means of the present invention may be indirectly couplable to an optical amplifying medium to/from which it directs pump radiation. That is to say, the coupling means may be coupled to a given amplifying medium via, for example, an intermediate length of optical transmission line or an intermediate optical/electro-optical component.

The optical amplifier according to the first aspect of the present invention may readily be seen to be applicable to an optical transmission system wherein the first optical amplifying medium forms part of a first optical transmission line and the second optical amplifying medium forms part of a second optical transmission line, and the optical amplifier is operable to amplify optical signals propagating in the first optical transmission line, and optical signals propagating in the second optical transmission line.

According to a second aspect of the present invention there is provided a method of pumping an optical amplifier including the steps of;
directing a first pump radiation into a first optical amplifying medium forming at least part of a first optical transmission line for optical pumping therein;
removing from the first transmission line pump radiation output from the first optical amplifying medium and directing it into a second optical amplifying medium forming at least part of a second optical transmission line for optical pumping therein.

Thus, it will be understood that the second aspect of the present invention provides a method of optical amplification in which unabsorbed pump radiation output a first optical amplifying medium of a first optical transmission line may be redirected into another optical amplifying medium of another optical transmission line so as to be utilized for effecting optical pumping therein. Consequently, it can be readily seen that a preferable aim of the present invention according to any of its aspects is to more fully and efficiently use available pump radiation.

Preferably, the method according to the second aspect of the present invention further includes the step of pumping the second optical amplifying medium with a second pump radiation. Consequently, it will be understood that the present invention provides a method of optical pumping which permits continued pumping of an optical amplifying medium even if its principal source of pump power fails. Thus, if the second source of pump radiation should fail, the second amplifying medium will continue to be pumped by the first pump radiation source.

When directing first pump radiation into the second transmission line, second pump radiation is, preferably, not simultaneously be removed therefrom. Consequently, second pump radiation will not be prevented from entering the second optical amplifying medium when directing unused first pump radiation therein.

Preferably, the method further includes the steps of removing from the second transmission line pump radiation output from the second optical amplifying medium and directing it into the first optical amplifying medium for optical pumping therein. Thus, it will be appreciated that the present invention provides a method of optical pumping in which failure of any one of the two said pump radiation sources does not prevent continued pumping of the optical amplifying medium with which the failed pump source is principally associated. Each pump radiation source is permitted to pump both of the first and second optical amplifying media.

When directing second pump radiation into the first transmission line, first pump radiation is, preferably, not simultaneously be removed therefrom. Consequently, first pump radiation will not be prevented from entering the first optical amplifying medium when directing unused second pump radiation therein.

Preferably, the method further includes the steps of;
directing pump radiation removed from the first optical transmission line into the second optical amplifying medium of the second optical transmission line such that it co-propagates with second pump radiation in the second optical transmission line. Thus, all pump radiation may preferably be input the second amplifying medium via the same end (e.g. fibre end).

Similarly, the method may further include the steps of;
directing the pump radiation removed from the second optical transmission line into the first optical amplifying medium of the first optical transmission line such that it co-propagates with first pump radiation in the first optical transmission line. Thus, all pump radiation may preferably be input the first amplifying medium via the same end (e.g. fibre end).

Alternatively, pump radiation may be directed into amplifying media via opposite ends when the second aspect of the invention includes the steps of;
directing the pump radiation removed from the first optical transmission line into the second optical amplifying medium so as to counter-propagate with second pump radiation propagating therein;
directing pump radiation removed from the second optical transmission line into the first optical amplifying medium so as to counter-propagate with first pump radiation propagating therein. Accordingly, unused pump radiation output the first amplifying medium (e.g. fibre) may be directed into the end of the second amplifying medium which is opposite to that via which second pump radiation is input the second amplifying medium, and vice versa.

The first and second optical amplifying media are preferably optical fibres doped with rare-earth elements and the first and second pump radiation are of different wavelengths which both reside within the same pumping band of dopant material present within the optical amplifying media. Alternatively, those wavelengths may separately reside within different pumping bands of dopant material within the optical amplifying media.

The first and second optical amplifying media may be respectively doped with different dopants or with the same dopants. Ideally, the first and second optical amplifying media are Erbium-doped optical fibres.

Preferably, the wavelength of the first pump radiation differs from the wavelength of the second pump radiation and each said wavelength lies within a pumping band of the first optical amplifying media, and within a pumping band of the second optical amplifying medium.

Preferably, the wavelength-selective optical couplers, according to any aspect of the present invention, are wavelength division multiplexing (WDM) couplers. For example, fused-fibre WDM optical couplers are preferably used due to their having a low insertion-loss, however, Bulk-Optic WDM optical couplers could also be employed.

Preferably, the wavelength of the first pump radiation may be approximately 976 nm while that of the second pump radiation may be approximately 984 nm thereby each residing within the known pumping band of an Erbium-doped fibre amplifier (EDFA) centred at 980 nm. However, it will be understood that other pumping bands may be utilized such as that centred at 1480 nm for EDFAs.

Thus, it can be readily seen that, according to any aspect of the present invention, unused pump radiation output from each one optical amplifying medium of a pair of optical transmission lines may be selectively redirected into, preferably, the input end of the other respective optical amplifying medium of the pair, so as to mutually boost the pump power levels of each.

It is preferable that pump radiation is removed from an optical transmission line selectively on the basis of wavelength according to this method.

Preferably, signal radiation (to be amplified) is substantially not removed from either of the first or second transmission lines according to any aspect of the present invention.

Consequently, it can be seen that the invention according to its second aspect may be applied to an optical transmission system when the first optical amplifying medium forms part of a first optical transmission line and the second optical amplifying medium forms part of a second optical transmission line. Accordingly, optical signals propagating in the first optical transmission line, and optical signals propagating in the second optical transmission line will be optically amplified with, preferably, a more efficient use of available pump radiation.

It is to be understood that in practical applications the efficacy with which the optical coupling means (and coupling elements) of the present invention remove or insert pump radiation depends upon the particulars of the application in question. In some practical applications it may be that substantially no pump radiation is removed from an optical transmission line by a coupler since none is output from the associated optical amplifying medium (e.g. it is all absorbed by the amplifying fibre). Alternatively, where unabsorbed pump radiation is output, it will be understood that inefficiencies in a given optical coupler may mean that not all the selected pump radiation is removed from a transmission line. However, it is preferably that substantially all selected pump radiation is so removed by the couplers of the present invention that are operable to do so, as far as is practicable.

The present invention shall now be described by way of illustrative but non-limiting embodiments with reference to the following figures:
Figure 1 illustrates an optical doped-fibre amplifier of conventional design.
Figure 2 illustrates an example of an amplifier of the present invention including 1 optical coupling means.
Figure 3a illustrates a preferred embodiment of the present invention employing 2 optical coupling means.
Figure 3b illustrates a another embodiment of the present invention employing 2 optical coupling means.
Figure 4 illustrates a preferred embodiment of the present invention employing 1 optical coupling means.

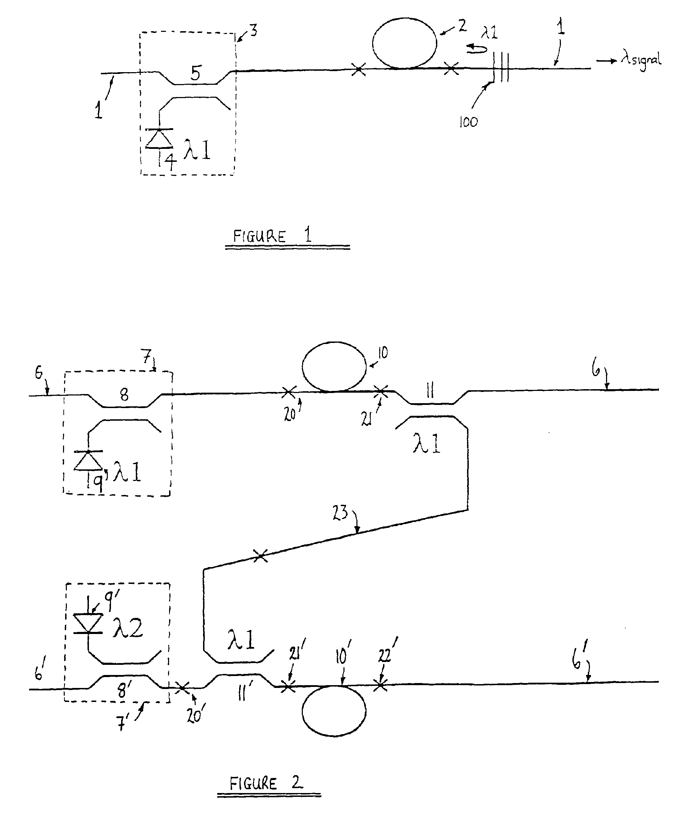

Referring to figure 1, there is illustrated in schematic form, a rare-earth doped-fibre optical amplifier of conventional design. The amplifier consists of an input transmission line 1 connected to the input of a length of rare-earth doped amplifying fibre 2. Pump radiation section 3, including a laser 4, is coupled to transmission line 1 by coupler 5 of section 3. In use pump radiation from laser 4 is injected into line 1 by coupler 5 so as to be combined with signal radiation propagating along line 1 through doped-fibre 2. The pump radiation subsequently enters doped-fibre 2 whereupon the pump radiation provides energy necessary for achieving the population inversion required for amplification of the signal radiation as is well known in the field. Unused pump radiation thereafter exits doped-fibre 2 and enters the rest of the transmission line 1 to which the output of doped-fibre 2 is connected.

Upon reaching pump power reflector 100 (e.g. a grating element) unused pump power radiation (λ1) is reflected back towards te amplifying fibre 2, while signal radiation λsignal is transmitted therethrough.

Referring to figure 2, there is illustrated an optical amplifier according to a first embodiment of the present invention. The optical amplifier includes pump radiation section 7 comprising a laser 9 which is operable to provide pump radiation substantially of wavelength λ1 to coupler 8 for injection into transmission line 6. The output of pump section 7 is connected at splice 20 to Erbium-doped fibre 10 (other rare-earth doped-fibres could be employed) which doped-fibre terminates at splice 21 where it is connected to the rest of transmission line 6 via wavelength-selective coupler 11. The coupler 11 is operable to remove from the transmission line 6 pump radiation of wavelength λ1 output from doped-fibre 10.
The optical amplifier further includes pump radiation section 7' comprising laser 9' operable to provide pump radiation substantially of wavelength λ2 to coupler 8' for injection into transmission line 6'. The output of pump section 7' is connected at splice 20' to wavelength-selective coupler 11' which is in turn connected to Erbium-doped fibre 10' (other rare-earth doped-fibres could be employed) at splice 21'. Doped-fibre 10' terminates at splice 22' where it is connected to the rest of transmission line 6'. The coupler 11' is operable to inject pump radiation substantially of wavelength λ1 into doped-fibre 10' of transmission line 6'.

Wavelength-selective couplers 11 and 11' are connected to each other via optical transmission line 23. Thus, it can be seen that pump radiation removed from line 6 by wavelength-selective coupler 11 may be directed via line 23 to wavelength-selective coupler 11' for subsequent injection into doped-fibre 10' of line 6'. Optical transmission line 23 is preferably an optical fibre transmission line but may be any other type of optical transmission line (e.g. an optical waveguide or the like).

The wavelength of pump radiation (λ2, produced by laser 9') injected into transmission line 6' by coupler 8' differs from that of the pump radiation (λ1, produced by laser 9) injected into line 6' by wavelength selective coupler 11'. Both wavelengths are chosen to lie within the pumping band of erbium centred at 980 nm. For example, λ1=976 nm and λ2=984 nm. Of course, other pumping bands may be used and λ1 may be chosen to lie within a pumping band different to that in which λ2 resides.

Consequently, the wavelength-selective couplers 11 and 11' of the present embodiment are selective to the extent that each one is operable to remove or inject radiation substantially of wavelength λ1 ,but not λ2, from or into the transmission line to which it is respectively connected.

This provision enables pump radiation of wavelength λ1 to be injected into transmission line 6' by coupler 11' without that coupler simultaneously removing pump radiation of wavelength λ2 from line 6'. It will, of course, be understood that couplers 11 and 11' are also operable such that signal radiation propagating along either transmission line is not removed therefrom by the respective coupler coupled thereto.

This can be achieved by employing narrow-band wavelength selective couplers such as would be readily apparent to the person skilled in the field of optical couplers. For example, narrow-band couplers of the wavelength division multiplexing (WDM) variety may be employed, preferably fused-fibre WDM couplers are used due to their low insertion loss. However, Bulk-Optic WDM couplers could be employed.

In use, pump radiation of wavelength λ1 is supplied to transmission line 6 by pump section 7 in a conventional manner. This radiation enters doped-fibre optical amplifying medium 10 and propagates therethrough while being at least partially absorbed thereby according to known pumping techniques. Unabsorbed pump radiation emanating from the output end 21 of doped-fibre 10 subsequently enters wavelength-selective coupler 11 whereupon it is substantially removed from line 6 and directed to wavelength-selective coupler 11' via transmission line 23 for subsequent injection into line 6' and input into doped-fibre optical amplifying medium 10' together with pump radiation λ2 from pump section 7'.

Hence, signal radiation input either of lines 6 or 6' will be optically amplified using pump radiation λ1 and λ2 respectively. However, signal radiation input transmission line 6' will also be amplified using the unabsorbed pump radiation λ1 output fibre 10. This results in either an increase in signal amplification on line 6' or a reduction in the power required by pump section 7' (or both). Indeed, pump section 7' could be absent from line 6' (or fail) and, according to the present invention, amplification of signals on line 6' would still be possible by virtue of injected pump radiation λ1.

It will be noted that according to this embodiment, pump radiation λ2 output from pump section 7' must enter coupler 11' before entering the input end of doped-fibre 10'. However, due to the appropriately chosen wavelength selectivity of coupler 11', pump radiation λ2 is not removed from transmission line 6' and may enter doped-fibre 10' substantially unimpeded. Similarly, pump radiation λ1 enters the input end of doped-fibre 10, via wavelength-selective coupler 12, substantially unimpeded.

Having chosen λ1 and λ2 such that each lies within a pumping band of the dopant material (e.g. Er) in the optical amplifying medium of fibre 10', both radiations may be used for pumping optical amplifying medium 10 and therefore for amplification of signal radiation passing therethrough.

It should be noted that the pump section 7' (and source 9' of pump radiation λ2) could be omitted from the embodiment illustrated in figure 2 without departing from the scope of the present invention. This is because pump radiation of wavelength λ1 is already provided to optical amplifying medium 10' regardless of the presence of pump section 7'. However, it is typically advantageous to have pump section 7' present so as to better enable amplification of signal radiation propagating through line 6'.

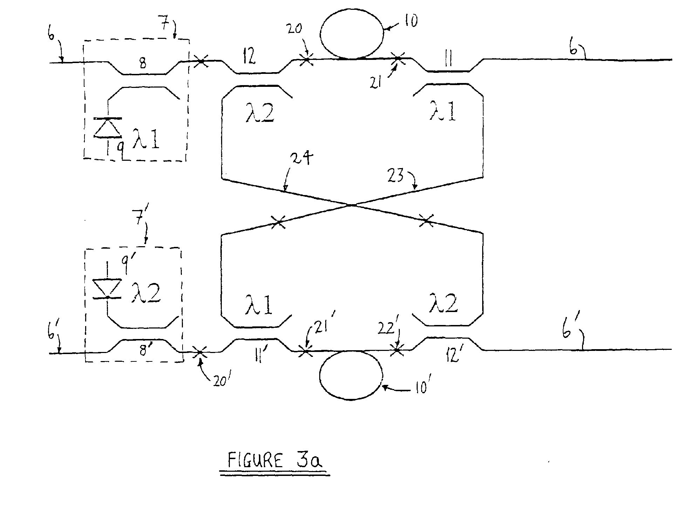

Figure 3a illustrates an alternative embodiment of an optical amplifier provided by the present invention. For the purposes of continuity, components illustrated in figures 3a and 3b which are intended to be identical to those illustrated in figure 2 have been correspondingly assigned identical reference numerals.

Consequently, it will be seen that the presently illustrated embodiment of figure 3a differs from that of figure 2 in that additional coupling means are provided for selectively removing unused pump radiation of wavelength λ2 from transmission line 6' and for inserting that radiation into transmission line 6. In particular, a first additional wavelength-selective coupler 12' is connected to transmission line 6' at splice 22', the connection being made at the output end of doped-fibre optical amplifying medium 10'. A second additional wavelength-selective coupler 12 is connected to transmission line 6 in between pump section 7 and amplifying doped-fibre 10.

Each of the two additional wavelength-selective couplers 12 and 12' are operable to respectively remove and inject pump radiation substantially of wavelength λ2 only, and not of wavelength λ1, from the respective transmission line to which each one is connected. Consequently, unused pump radiation of wavelength λ2 output from doped-fibre 10' may be redirected via coupler 12', optical transmission line 24 and coupler 12, to transmission line 6 for input to doped-fibre 10 for the purposes of pumping without simultaneously removing pump radiation λ1 from that line. Line 24 may be any form of optical transmission line (e.g. optical fibre, optical waveguide or the like), but preferably an optical fibre is used.

Note that, according to this embodiment, pump radiation λ1 output from pump section 7 must enter coupler 12 before entering the input end of doped-fibre 10. However, due to the appropriately chosen wavelength selectivity of coupler 11, pump radiation λ1 is not removed from transmission line 6 thereby and may enter doped-fibre 10 substantially unimpeded. Similarly, pump radiation λ2 enters the input end of doped-fibre 10', via wavelength-selective coupler 11', substantially unimpeded as discussed above.

It will be understood that λ1 and λ2 are, preferably, to be chosen such that each of the first and second pump radiations may be used in optically pumping either of the doped fibres 10 and 10'.

Consequently, according to the present embodiment, unused pump radiation output any one doped-fibre optical amplifying medium of the transmission line pair 6, 6' may be utilized to boost the pump power level input the optical amplifying medium of the other line of the pair.

It is to be noted that, preferably, the WDM couplers 11 and 12' illustrated in figures 2, 3a and couplers 110 and 120 of figure 3b, may be chosen to be broadband couplers such that each is operable to remove both pump wavelengths λ1 and λ2 from respective transmission lines 6 and 6'.

Thus, couplers 11 and 12' may be chosen to remove substantially all pump radiation output the respective amplifying media 10 and 10'. Pump radiation of wavelengths λ1 and λ2 would then be directed to narrow band WDM couplers 11' and 12. However, only the pump radiation of wavelength λ1 would subsequently be injected into line 6' by coupler 11', while pump radiation of wavelength λ2 would be dissipated (e.g. as heat) thereby. Similarly, only the pump radiation of wavelength λ2 would subsequently be injected into line 6 by coupler 12, while pump radiation of wavelength λ1 would be dissipated (e.g. as heat) thereby.

Figure 3b illustrates an embodiment employing such broadband WDM couplers 110 and 120 at the outputs 21 and 22' of respective amplifying fibres 10 and 10'.

This embodiment also employs an advantageous coupling position for narrow-band couplers 11' and 12. In particular, as figure 3b illustrates, narrow-band WDM coupler 11' is coupled to pump section 7' between laser 9' and broadband WDM coupler 8'. Coupler 11' is operable to inject pump radiation of wavelength λ1 into transmission line 6' via coupler 8' without simultaneously removing pump radiation of wavelength λ2 from pump section 7'. While coupler 11' is narrow band, both couplers 8' and 110 are broadband (as discussed above) such that both are capable of inserting/removing radiation of wavelengths including λ1 and λ2 (but not λ_{signal}) into/from the transmission line to which they are coupled.

The advantage of placing coupler 11' within pump section 7' and not on line 6' derives from consequently not having to splice the coupler into the transmission line itself and therefore incur the associated insertion losses in signal power.

In use, broadband coupler 110 removes all pump radiation from transmission line 6 and directs it, via line 23, to narrow-band coupler 11'. Coupler 11' inserts pump radiation of wavelength λ1 into section 7' while dissipating radiation of other pump wavelengths (e.g. λ2). Similarly, pump radiation from pump section 7' is not removed therefrom by coupler 11' (i.e. coupler 11' does not couple λ2 across the limbs of the coupler, only λ1 is so coupled).

Pump radiation λ1 and λ2 are output from coupler 11' and directed into coupler 8' for subsequent insertion into line 6' and fibre 10'.

It will be noted that couplers 120 and 12, pump section 7 and coupler 8 are similarly operable.

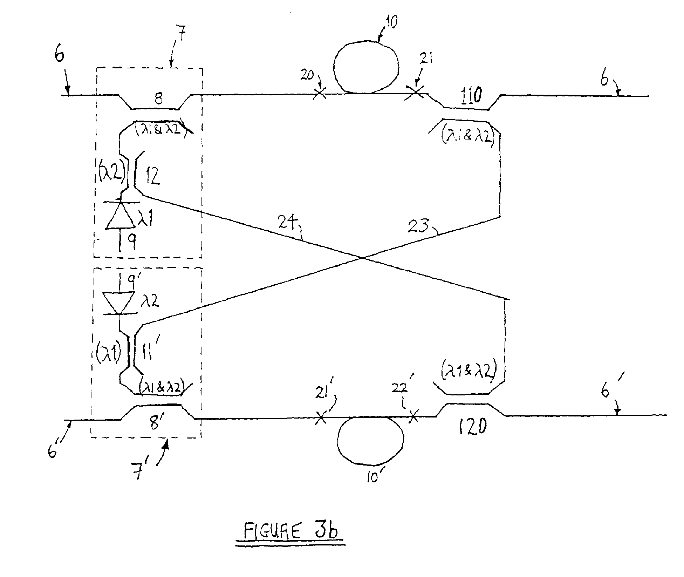

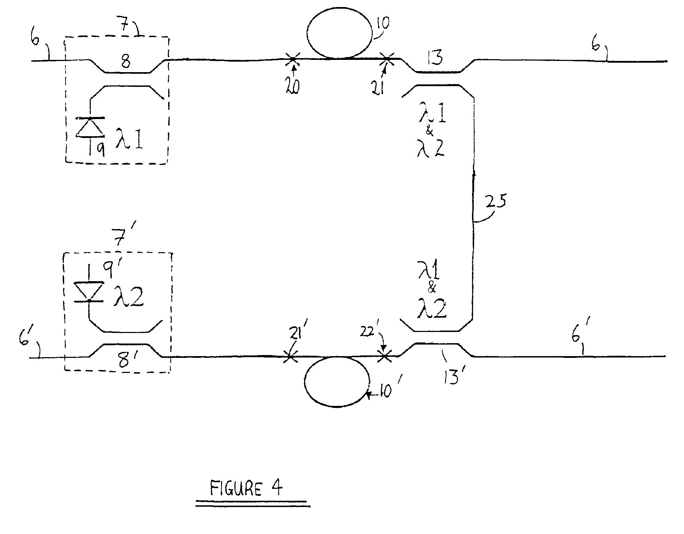

Referring to figure 4 there is illustrated an embodiment of the present invention wherein each respective one of the wavelength-selective coupling means 13 and 13' of the coupler of the present invention is connected to the output end of a respective one amplifying doped-fibre 10 and 10' of transmission lines 6 and 6'. The coupling means 13 and 13' are coupled to the respective transmission lines 6 and 6' such that each is operable not only to remove pump radiation from the transmission line to which it is coupled, but also to inject therein pump radiation removed from the other transmission line.

In particular, wavelength-selective coupler 13' is connected to the transmission line 6' at the output end 22' of doped-fibre 10'. Consequently, unused pump radiation of wavelength λ2 output that end doped-fibre 10' is removed from transmission line 6' by the coupler 13' and subsequently directed to wavelength-selective coupler 13 via optical transmission line 25 (e.g. fibre, waveguide etc) whereupon it is injected into transmission line 6 and thence into the output end of doped-fibre 10 by that coupler.

Similarly, coupler is 13 connected to transmission line 6 at the output end 21 of doped-fibre 10 such that unused pump radiation of wavelength λ1 output from the latter is removed from transmission line 6 by coupler 13 and directed to coupler 13' whereupon it is injected into the output end of doped-fibre 10'.

Thus, it will be seen that a single optical coupling means according to the present invention may boost pump power levels in doped-fibre 10 with unused pump radiation from pump section 7' and simultaneously boost pump power levels in doped-fibre 10' with unused pump radiation from pump section 7.

According to this embodiment, the wavelength-selective couplers 13 and 13' may be operable over wavelengths within a range which includes both λ1 and λ2, or alternatively, pump radiation could be chosen such that, substantially, λ1 = λ2. Of course, the wavelength-selective couplers 13 and 13' will still be selective to the extent that they do not select signal radiation for removal from a given transmission line.

In a further embodiment of the present invention, according to any of its aspects, two pump sources per pump section may be employed. Each pump section 7 and 7' may comprise two separate pump radiation sources (e.g. lasers) the outputs of which are combined within the respective pump section and directed into the respective coupler (8 or 8') of the pump section in question. For example, a polarization mode coupler may be employed (e.g. a PM combiner) for combining the outputs of each pump section laser pair substantially without coupling losses. Providing two independent laser sources in this way ensures that failure of any one source will not prevent the associated pump section from continuing to provide pump radiation (i.e. via the other laser of the pair).

Thus, it will be understood that the present invention permits construction of an optical amplifier (or method therefor) with the preferable aim of increasing the efficiency of pump power use. This is may be achievable, according to the present invention, by redirecting unused pump radiation output one or more optical amplifying media and directing that radiation into another amplifying medium for further use in optical pumping. By employing wavelength-selective optical couplers, and by utilizing the availability of dopant pumping bands, this selective redirection may be achieved. The present invention also provides an optical amplifier (or method of pumping the same) which is robust to the failure of any one pump radiation source.

The optical coupling means and resulting optical amplifier of the present invention may be applied to separate and complete optical transmission lines (6 and 6') which are substantially uncoupled over long distances, other than by the present amplifier, such that, for example, each may carry different and independent optical signals. In particular, the present invention is particularly suitable for application to a fibre-pair (e.g. a duplex fibre).

Alternatively, the optical coupling means and resulting amplifier of the present invention may be applied to a single optical transmission line carrying signal radiation which may be separated into two paths (by a suitable bifurcation in the line) each one of which is then separately input into a respective one of the lines (6 and 6') of the amplifier, for simultaneous amplification. Upon output from the amplifier, the amplified separate signals may then be subsequently recombined and in to one single transmission line by suitable combining means.

It is to be understood that further modification and variations in the embodiments described herein, as would be readily apparent to the skilled artisan, are envisaged without departing from the scope of the present invention.

## Claims

1. An optical amplifier including;
a first optical amplifying medium forming at least part of a first optical transmission line;
a first pumping means including a source of first pump radiation and operable to direct first pump radiation into the first optical amplifying medium;
a second optical amplifying medium forming at least part of a second optical transmission line;
an optical coupling means operable to remove from the first optical transmission line first pump radiation output from the first optical amplifying medium and to direct the removed first pump radiation into the second optical amplifying medium.

2. An optical amplifier according to claim 1 wherein the optical coupling means further includes;
a first optical coupling element couplable to the first optical transmission line and operable to remove therefrom first pump radiation output from the first optical amplifying medium;
a second optical coupling element coupled to the first optical coupling element and couplable to the second optical transmission line and operable to direct into the second optical amplifying medium first pump radiation removed from the first optical transmission line by the first optical coupling element.

3. An optical amplifier according to any of claims 1 and 2 further including;
a second pumping means including a source of second pump radiation and operable to direct second pump radiation into the second optical amplifying medium.

4. An optical amplifier according to claim 3 wherein the first optical coupling element is operable to remove second pump radiation and the second optical coupling element is wavelength selective such that it only directs first pump radiation into the second optical amplifying medium.

5. An optical amplifier according to claim 4 wherein the second pumping means includes a pump coupling means couplable to the second optical transmission line and said second wavelength-selective coupling element is coupled to the second optical transmission line via the pump coupling means of the second pumping means, and said pump coupling means is operable to direct into said second optical amplifying medium said second pump radiation and pump radiation removed from the first optical transmission line.

6. An optical amplifier according to any of claims 4 to 5 wherein the second wavelength-selective optical coupling element is operable to insert into or remove from an optical transmission line pump radiation lying within one or more predetermined wavelength ranges, which ranges include the wavelength of the first pump radiation and exclude the wavelength of the second pump radiation.

7. An optical amplifier according to any of claims 4 to 5 wherein the first and second optical coupling elements are wavelength selective and are operable to insert into or remove from an optical transmission line pump radiation lying within one or more predetermined wavelength ranges, which ranges include the wavelength of the first pump radiation and exclude the wavelength of the second pump radiation.

8. An optical amplifier according to any of preceding claims 4 to 7 wherein the second optical coupling element is couplable to the second optical transmission line such that the removed first pump radiation is directed into the second optical amplifying medium so as to co-propagate with any second pump radiation propagating therein.

9. An optical amplifier according to any of claims 3 to 8 further including;
an optical coupling means operable to remove from the second optical transmission line second pump radiation output from the second optical amplifying medium and to direct the removed pump radiation into the first optical amplifying medium.

10. An optical amplifier according to claim 9 further including;
a third optical coupling element couplable to the second optical transmission line and operable to remove therefrom second pump radiation output from the second optical amplifying medium;
a fourth optical coupling element coupled to the third optical coupling element and couplable to the first optical transmission line and operable to direct into the first optical amplifying medium second pump radiation removed from the second optical transmission line by the third optical coupling element.

11. An optical amplifier according to claim 10 wherein the third optical coupling element is operable to remove first pump radiation and the fourth optical coupling element is wavelength selective such that it only directs second pump radiation into the first optical amplifying medium.

12. An optical amplifier according to claim 11 wherein the first pumping means includes a pump coupling means couplable to the first optical transmission line and the fourth wavelength-selective optical coupling element is coupled to the first optical transmission line via the pump coupling means of the first pumping means, and said pump coupling means is operable to direct into said first optical amplifying medium said first pump radiation and pump radiation removed from the second optical transmission line.

13. An optical amplifier according to any of claims 11 and 12 wherein the fourth wavelength-selective optical coupling element is operable to remove from an optical transmission line pump radiation lying within one or more predetermined wavelength ranges, which ranges include the wavelength of the second pump radiation and excludes the wavelength of the first pump radiation.

14. An optical amplifier according to any of claims 11 and 12 wherein the third and fourth optical coupling elements are wavelength-selective and are operable to remove from an optical transmission line pump radiation lying within one or more predetermined wavelength ranges, which ranges include the wavelength of the second pump radiation and excludes the wavelength of the first pump radiation.

15. An optical amplifier according to any of claims 11 to 14 wherein the fourth wavelength-selective optical coupling element is couplable to the first optical transmission line such that the removed second pump radiation is directed into the first optical amplifying medium so as to co-propagate with any first pump radiation propagating within the first optical amplifying medium.

16. An optical amplifier according to claim 3 wherein the optical coupling means is further operable to remove from the second optical transmission line second pump radiation output from the second optical amplifying medium and to direct the removed second pump radiation into the first optical amplifying medium, wherein;
said second optical coupling element is couplable to the second optical transmission line such that any first pump radiation removed from the first optical transmission line is directed into the second optical amplifying medium so as to counter-propagate with any second pump radiation propagating therein; and,
the first optical coupling element is couplable to the first optical transmission line such that any second pump radiation removed from the second optical transmission line is directed into the first optical amplifying medium so as to counter-propagate with any first pump radiation propagating therein.

17. An optical amplifier according to any preceding claim wherein the first and second optical amplifying media are optical fibres doped with rare-earth elements and the first and second pump radiation are of different wavelengths which both reside within the same pumping band of dopant material present within the optical amplifying media.

18. An optical amplifier according to any of claims 1 to 16 wherein the first and second optical amplifying media are optical fibres doped with rare-earth elements and the first and second pump radiation are of different wavelengths which separately reside within different pumping bands of dopant material within the first and second optical amplifying media.

19. An optical amplifier according to any preceding claim wherein the first and second optical amplifying media are respectively doped with different dopants.

20. An optical amplifier according to any of claims 1 to 18 wherein the first and second optical amplifying media are respectively doped with the same dopant.

21. An optical amplifier according to claim 20 wherein the first and second optical amplifying media are Erbium-doped optical fibres.

22. An optical amplifier according to any of claims 3 to 21, wherein;
the wavelength of the first pump radiation differs from the wavelength of the second pump radiation and each said wavelength lies within a pumping band of the first and the second optical amplifying media.

23. An optical amplifier according to any preceding claim, wherein;
the first optical amplifying medium forms part of a first optical transmission line and the second optical amplifying medium forms part of a second optical transmission line, and the optical amplifier is operable to amplify optical signals propagating in the first optical transmission line, and signals propagating in the second optical transmission line.

24. An optical signal transmission system including an optical amplifier according to any preceding claim.

25. An optical amplifier substantially as described in any one embodiment herein, with reference to figures 2 to 4.

26. A method of pumping an optical amplifier including the steps of;
directing a first pump radiation into a first optical amplifying medium forming at least part of a first optical transmission line for optical pumping therein;
removing from the first transmission line pump radiation output from the first optical amplifying medium and directing it into a second optical amplifying medium forming at least part of a second optical transmission line for optical pumping therein.

27. A method of pumping an optical amplifier according to claim 26 further including the step of;
directing a second pump radiation into the second optical amplifying medium for optical pumping therein.

28. A method of pumping an optical amplifier according to any of claims 26 and 27 wherein the method further includes the steps of;
removing from the second transmission line pump radiation output from the second optical amplifying medium and directing it into the first optical amplifying medium for optical pumping therein.

29. A method of pumping an optical amplifier according to any of claims 26 to 28 wherein the method further includes the steps of;
directing the pump radiation removed from the first optical transmission line into the second optical amplifying medium of the second optical transmission line such that it co-propagates with any second pump radiation in the second optical amplifying medium.

30. A method of pumping an optical amplifier according to any of claims 28 to 29 wherein the method further includes the steps of;
directing the pump radiation removed from the second optical transmission line into the first optical amplifying medium of the first optical transmission line such that it co-propagates with first pump radiation in the first optical amplifying medium.

31. A method of pumping an optical amplifier according to claim 28 including the steps of;
directing the pump radiation removed from the first optical transmission line into the second optical amplifying medium so as to counter-propagate with second pump radiation propagating therein;
directing pump radiation removed from the second optical transmission line into the first optical amplifying medium so as to counter-propagate with first pump radiation propagating therein.

32. A method of pumping an optical amplifier according to any of claims 26 to 31 wherein the first and second optical amplifying media are optical fibres doped with rare-earth elements and the first and second pump radiation are of different wavelengths which both reside within the same pumping band of dopant material present within the optical amplifying media.

33. A method of pumping an optical amplifier according to any of claims 26 to 31 wherein the first and second optical amplifying media are optical fibres doped with rare-earth elements and the first and second pump radiation are of different wavelengths which separately reside within different pumping bands of dopant material within the optical amplifying media.

34. A method of pumping an optical amplifier according to any of claims 32 to 33 wherein the first and second optical amplifying media are respectively doped with different dopants.

35. A method of pumping an optical amplifier according to any of claims 32 to 33 wherein the first and second optical amplifying media are respectively doped with the same dopant.

36. A method of pumping an optical amplifier according to any of claims 32 to 35 wherein the first and second optical amplifying media are Erbium-doped optical fibres.

37. A method of pumping an optical amplifier according to any of claims 26 to 36 wherein;
wherein the wavelength of the first pump radiation differs from the wavelength of the second pump radiation and each said wavelength lies within a pumping band of the first and the second optical amplifying media.

38. A method of pumping an optical amplifier according to any of claims 26 to 37 wherein pump radiation is removed from an optical transmission line selectively on the basis of wavelength.

39. An method of pumping an optical amplifier according to any of preceding claims 26 to 38, wherein;
the first optical amplifying medium forms part of a first optical transmission line and the second optical amplifying medium forms part of a second optical transmission line;
such that optical signals propagating in the first optical transmission line, and optical signals propagating in the second optical transmission line are optically amplified.

40. A method of pumping an optical amplifier substantially as described in any one embodiment herein, with reference to figures 2 to 4.
